# EUROPEAN PATENT APPLICATION

(11) **EP 4 195 492 A1**
(43) Date of publication of application: **14.06.2023**
(21) Application number: 22160982.9
(22) Date of filing: 09.03.2022
(51) Int. Cl.: H02P 6/18

(54) **MOTOR CONTROL SYSTEM AND MOTOR CONTROL METHOD**

(30) Priority: 09.12.2021 US 202163287959 P; 18.02.2022 US 202217674852
(71) Applicant: Bamboo Dynamics Corporation., Ltd., Jubei, Hsinchu 302058 (TW)
(72) Inventor: Chan, Yuan Chen, 302058 Jubei, Hsinchu (TW); Chuang, Chi-Ming, 300060 Hsinchu City (TW)
(74) Representative: Becker, Eberhard

(57) **Abstract**

A motor control system and a motor control method are provided. The motor control method includes: coupling a brushless direct current (BLDC) motor of the motor device to the motor controller via at least one wire, wherein the motor controller provides power to the BLDC motor via the at least one wire; and coupling a sensor of the motor device to the motor controller via the at least one wire, wherein the sensor generates sensed data, wherein the sensed data is transmitted to the motor controller via the at least one wire.

## Description

### BACKGROUND

### Technical Field

The disclosure is directed to a motor control system and a motor control method.

### Description of Related Art

To manage the activity of a motor, a traditional motor controller may detect the position of the rotor of the motor in relation to the stator of the motor via motor position sensors (e.g., Hall sensor), wherein the motor position sensors need to be powered by the motor controller through two wires. The motor preferably requires environmental sensors to obtain sensed data (i.e., temperature or vibration), wherein each sensor has to be wired to the motor controller so as to transmit output signals to the motor controller. In addition, the motor controller needs three wires to provide power to the motor. Accordingly, a lot of wires are used between the motor controller and the motor. These number of wires may consume a lot of space and make the layout of the wires become more complex.

Therefore, a solution is needed to provide sensed data of the motor to the motor controller through simple wiring.

### SUMMARY

The disclosure is directed to a motor control system and a motor control method. The disclosure may simplify wiring for the motor, while allowing the motor to feedback environmental factors that may affect the performance of the motor at the same time.

The disclosure is directed to a motor control system, including a motor controller and a motor device. The motor device includes a brushless direct current (BLDC) motor and a sensor. The BLDC motor coupled to the motor controller via at least one wire, wherein the motor controller provides power to the BLDC motor via the at least one wire. The sensor coupled to the motor controller via the at least one wire, wherein the sensor generates sensed data, wherein the sensed data is transmitted to the motor controller via the at least one wire.

In one embodiment, the power is transmitted via the at least one wire at a first frequency and the sensed data is transmitted via the at least one wire at a second frequency, wherein the second frequency is different from the first frequency.

In one embodiment, the BLDC motor is a sensorless motor.

In one embodiment, the sensor includes at least one of the followings: an acoustic emission sensor, a temperature sensor, and a vibration sensor.

In one embodiment, the BLDC motor is a three-phase BLDC motor, wherein the at least one wire includes three wires.

In one embodiment, the motor controller transmits a command to the motor device via the at least one wire, wherein the motor device feedbacks the sensed data to the motor controller according to the command.

In one embodiment, the motor device further including a codec and a modulation circuit. The codec coupled to the sensor, wherein the codec converts the sensed data from analog data to digital data. The modulation circuit coupled to the codec, wherein the modulation circuit modulates the sensed data with the second frequency.

In one embodiment, the motor controller including an inverter and a processor. The inverter coupled to the at least one wire, wherein the inverter provides the power to the BLDC motor. The processor coupled to the inverter, wherein the processor configures the inverter to provide the power to control the BLDC motor.

In one embodiment, the motor controller further including: a modulation circuit coupled to the at least one wire and the processor, wherein the modulation circuit demodulates the sensed data to obtain demodulated sensed data and forwards the demodulated sensed data to the processor, wherein the processor configures the inverter according to the demodulated sensed data.

In one embodiment, the motor controller further including a position detector coupled to the at least one wire and the processor, wherein the position detector obtains position information of the BLDC motor via the at least one wire and transmits the position information to the processor, wherein the processor configures the inverter according to the position information.

The disclosure is directed to a motor control method, adapted to a motor control system including a motor controller and a motor device, wherein the motor control method including: coupling a brushless direct current (BLDC) motor of the motor device to the motor controller via at least one wire, wherein the motor controller provides power to the BLDC motor via the at least one wire; and coupling a sensor of the motor device to the motor controller via the at least one wire, wherein the sensor generates sensed data, wherein the sensed data is transmitted to the motor controller via the at least one wire.

To make the aforementioned more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1 illustrates a schematic diagram of a motor control system according to an embodiment of the disclosure.
FIG. 2 illustrates a flowchart of a motor control method according to an embodiment of the disclosure.

### DESCRIPTION OF THE EMBODIMENTS

In order to make the disclosure more comprehensible, several embodiments are described below as examples of implementation of the disclosure. Moreover, elements/components/steps with the same reference numerals are used to represent identical or similar parts in the figures and embodiments where appropriate.

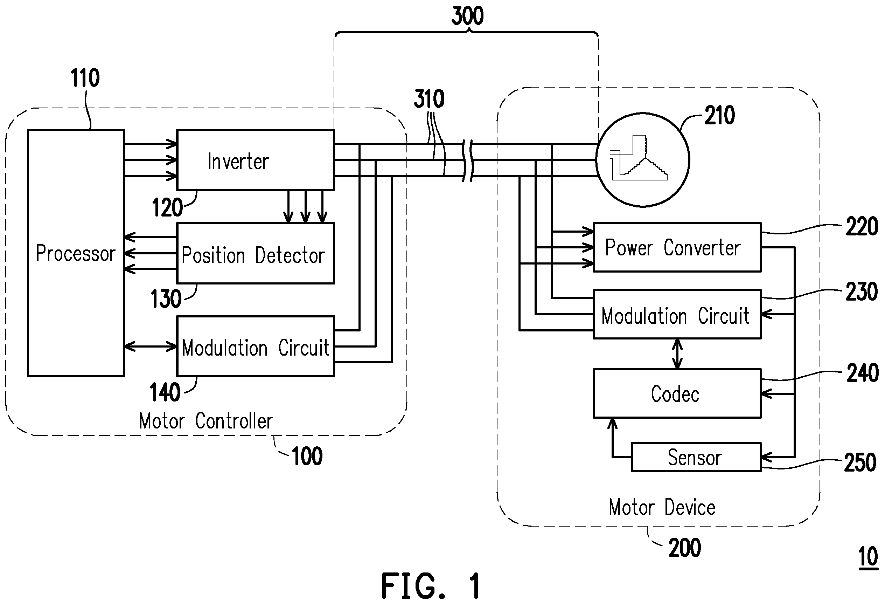

FIG. 1 illustrates a schematic diagram of a motor control system 10 according to an embodiment of the disclosure. The motor control system 10 may include a motor controller 100 and a motor device 200. The motor controller 100 may connect to the motor device 200 via a wire set 300, wherein the wire set 300 may include one or more wires. In one embodiment, the wire set 300 may include three wires 310. The wires 310 may be any conductor that can transmit electronic signals, such as a copper wire or an aluminum wire.

The motor controller 100 may include a processor 110, an inverter 120, a position detector 130, and a modulation circuit 140. The processor 110 may be coupled to the inverter 120, the position detector 130, and the modulation circuit 140. The inverter 120 may be coupled to the position detector 130. The inverter 120 and/or the modulation circuit 140 may be coupled to the wire set 300.

The motor device 200 may include a brushless direct current (BLDC) motor 210, a power converter 220, a modulation circuit 230, a codec 240, and a sensor 250. The power converter 220 may be coupled to the modulation circuit 230, the codec 240, and the sensor 250. The modulation circuit 230 may be coupled to the codec 240. The codec 240 may be coupled to the sensor 250. The BLDC motor 210, the power converter 220, or the modulation circuit 230 may be coupled to the wire set 300.

The processor 110 is, for example, a Central Processing Unit (CPU), or other programmable general purpose or special purpose Micro Control Unit (MCU), a microprocessor, a Digital Signal Processor (DSP), a programmable controller, an Application Specific Integrated Circuit (ASIC), a Graphics Processing Unit (GPU), an Arithmetic Logic Unit (ALU), a Complex Programmable Logic Device (CPLD), a Field Programmable Gate Array (FPGA) or other similar device or a combination of the above devices.

The inverter 120 may connect to the BLDC motor 210 via the wire set 300. The processor 110 may configure the inverter 120 to provide power to the BLDC motor 210. In one embodiment, the BLDC motor 210 may be a three-phase BLDC motor. The inverter 120 may provide the 3-phase alternating current (AC) power to the BLDC motor 210 via the three wires 310. The BLDC motor 210 may include an AC/DC converter which can transfer the AC power provided by the inverter 120 to the direct current (DC) power such that the BLDC motor 210 may be driven by the DC power.

The BLDC motor 210 may be a sensorless motor. That is, the BLDC motor 210 may not include any Hall sensor. Accordingly, compared to the traditional sensored motor which needs at least three wires for connecting the motor controller to three Hall sensors, no wiring is required for connecting a Hall sensor to the processor 110 in the present disclosure.

The power converter 220 may be coupled to the BLDC motor 210 or the wire set 300 so as to extract the power from the BLDC motor 210 or the wire set 300. The power converter 220 may provide the power to the modulation circuit 230, the codec 240, or the sensor 250.

After receiving an initial current provided by the processor 110 through the inverter 120, the BLDC motor 210 may generate a voltage signal (i.e., back electromotive force) corresponding to the position of the BLDC motor 210. When the motor winding of the BLDC motor 210 is not power driven, the position detector 130 may obtain the position information of the BLDC motor 210 by detecting the voltage signal sent by the BLDC motor 210 through the wire set 300 wherein the position information may include a position of the rotor relative to the stator. The position detector 130 may transmit the position information of the BLDC motor 210 to the processor 110 such that the processor 110 may control the operation of the BLDM motor 210 by configuring the inverter 120 according to the position information. In one embodiment, the position detector 130 may include a zero-phase detector and the position information may include a result of zero phase tracking for the BLDC motor 210.

In one embodiment, the processor 110 may control the BLDC motor 210 based on the environmental factors of the BLDC motor 210. Specifically, the motor device 200 may include a sensor 250 for generating sensed data associated with the BLDC motor 210. For example, the sensor 250 may include an acoustic emission sensor, a temperature sensor, or a vibration sensor, but the disclosure is not limited thereto. The sensed data generated by the sensor 250 may be analog data. The codec 240 may convert the sensed data from analog data to digital data. In one embodiment, the codec 240 may further encode the sensed data.

The modulation circuit 230 may include a modulator or a demodulator. After the codec 240 coverts the sensed data to digital data, the modulation circuit 230 may modulate the sensed data with a carrier frequency, wherein the carrier frequency of the sensed data may be different from the frequency of the power transmitted via the wire set 300. After modulating the sensed data, the modulation circuit 230 may transmit the sensed data to the modulation circuit 140 via the wire set 300. Since the frequency of the sensed data is different from the frequency of the power, the transmission of the sensed data does not cause interference to the power signal.

The modulation circuit 140 may include a modulator or a demodulator. The modulation circuit 140 may demodulate the sensed data from the modulation circuit 230 to obtain demodulated sensed data. The modulation circuit 140 may forward the demodulated sensed data to the processor 110. The processor 110 may output a report in response to abnormal sensed data or the processor 110 may configure the BLDC motor 210 by configuring the inverter 120 according to the demodulated sensed data.

In one embodiment, the motor device 200 may feedback the sensed data to the motor controller 100 according to a command from the motor controller 100. Specifically, if sensed data is needed, the processor 110 may transmit a command to the motor device 200 via the wire set 300. The modulation circuit 230 may feedback the sensed data generated by the sensor 250 in response to receiving the command from the wire set 300.

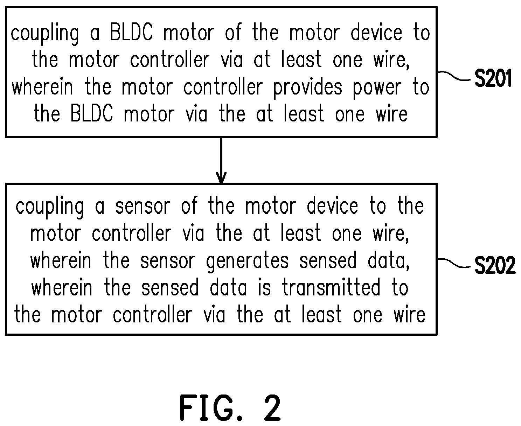

FIG. 2 illustrates a flowchart of a motor control method according to an embodiment of the disclosure, wherein the motor control method may be implemented by the motor control system 10 as shown in FIG. 1. In step S201, coupling a BLDC motor of the motor device to the motor controller via at least one wire, wherein the motor controller provides power to the BLDC motor via the at least one wire. In step S202, coupling a sensor of the motor device to the motor controller via the at least one wire, wherein the sensor generates sensed data, wherein the sensed data is transmitted to the motor controller via the at least one wire.

In summary, the motor control system of the disclosure allows the motor device to be powered and to feedback sensed data to the motor controller by the same wires, thus no additional wiring is required. The power and the feedback data may be transmitted via different frequency such that interference between the power and the feedback data can be minimized. The feedback of the motor device may be triggered by a command from the motor controller. The motor controller may configure the motor according to the information feedback by the motor device.

## Claims

1. A motor control system (10), **characterized in that**, comprising:
a motor controller (100); and
a motor device (200), comprising:
a brushless direct current (BLDC) motor (210), coupled to the motor controller (100) via at least one wire (310), wherein the motor controller (100) provides power to the BLDC motor (210) via the at least one wire (310); and
a sensor (250), coupled to the motor controller (100) via the at least one wire (310), wherein the sensor (250) generates sensed data, wherein the sensed data is transmitted to the motor controller (100) via the at least one wire (310).

2. The motor control system (10) of claim 1, wherein the power is transmitted via the at least one wire (310) at a first frequency and the sensed data is transmitted via the at least one wire (310) at a second frequency, wherein the second frequency is different from the first frequency.

3. The motor control system (10) of claim 1, wherein the BLDC motor (210) is a sensorless motor.

4. The motor control system (10) of claim 1, wherein the sensor (250) comprises at least one of the followings: an acoustic emission sensor, a temperature sensor, and a vibration sensor.

5. The motor control system (10) of claim 1, wherein the BLDC motor (210) is a three-phase BLDC motor, wherein the at least one wire (310) includes three wires.

6. The motor control system (10) of claim 1, wherein the motor controller (100) transmits a command to the motor device (200) via the at least one wire (310), wherein the motor device (200) feedbacks the sensed data to the motor controller (100) according to the command.

7. The motor control system (10) of claim 2, wherein the motor device (200) further comprising:
a codec (240), coupled to the sensor (250), wherein the codec (240) converts the sensed data from analog data to digital data; and
a modulation circuit (230), coupled to the codec (240), wherein the modulation circuit (230) modulates the sensed data with the second frequency.

8. The motor control system (10) of claim 1, wherein the motor controller (100) comprising:
an inverter (120), coupled to the at least one wire (310), wherein the inverter (120) provides the power to the BLDC motor (210); and
a processor (110), coupled to the inverter (120), wherein the processor (110) configures the inverter (120) to provide the power to control the BLDC motor (210).

9. The motor control system (10) of claim 8, wherein the motor controller (100) further comprising:
a modulation circuit (140), coupled to the at least one wire (310) and the processor (110), wherein the modulation circuit (140) demodulates the sensed data to obtain demodulated sensed data and forwards the demodulated sensed data to the processor (110), wherein the processor (110) configures the inverter (120) according to the demodulated sensed data.

10. The motor control system (10) of claim 8, wherein the motor controller (100) further comprising:
a position detector (130), coupled to the at least one wire (310) and the processor (110), wherein the position detector (130) obtains position information of the BLDC motor (210) via the at least one wire (310) and transmits the position information to the processor (110), wherein the processor (110) configures the inverter (120) according to the position information.

11. A motor control method, adapted to a motor control system comprising a motor controller and a motor device, **characterized in that**, the motor control method comprising:
coupling a brushless direct current (BLDC) motor of the motor device to the motor controller via at least one wire, wherein the motor controller provides power to the BLDC motor via the at least one wire (S201); and
coupling a sensor of the motor device to the motor controller via the at least one wire, wherein the sensor generates sensed data, wherein the sensed data is transmitted to the motor controller via the at least one wire (S202).

## Amended claims

### Amended claims in accordance with Rule 137(2) EPC.

1. A motor control system (10), **characterized in that**, comprising:
a motor controller (100); and
a motor device (200), comprising:
a brushless direct current (BLDC) motor (210), coupled to the motor controller (100) via at least one wire (310), wherein the motor controller (100) provides power to the BLDC motor (210) via the at least one wire (310); and
a sensor (250), coupled to the motor controller (100) via the at least one wire (310), wherein the sensor (250) generates sensed data, wherein the sensed data is transmitted to the motor controller (100) via the at least one wire (310), wherein the sensor (250) comprises at least one of the followings: an acoustic emission sensor, a temperature sensor, and a vibration sensor, wherein the motor controller (100) transmits a command to the motor device (200) via the at least one wire (310), wherein the motor device (200) feedbacks the sensed data to the motor controller (100) according to the command.

2. The motor control system (10) of claim 1, wherein the power is transmitted via the at least one wire (310) at a first frequency and the sensed data is transmitted via the at least one wire (310) at a second frequency, wherein the second frequency is different from the first frequency.

3. The motor control system (10) of claim 1, wherein the BLDC motor (210) is a sensorless motor.

4. The motor control system (10) of claim 1, wherein the BLDC motor (210) is a three-phase BLDC motor, wherein the at least one wire (310) includes three wires.

5. The motor control system (10) of claim 2, wherein the motor device (200) further comprising:
a codec (240), coupled to the sensor (250), wherein the codec (240) converts the sensed data from analog data to digital data; and
a modulation circuit (230), coupled to the codec (240), wherein the modulation circuit (230) modulates the sensed data with the second frequency.

6. The motor control system (10) of claim 1, wherein the motor controller (100) comprising:
an inverter (120), coupled to the at least one wire (310), wherein the inverter (120) provides the power to the BLDC motor (210); and
a processor (110), coupled to the inverter (120), wherein the processor (110) configures the inverter (120) to provide the power to control the BLDC motor (210).

7. The motor control system (10) of claim 6, wherein the motor controller (100) further comprising:
a modulation circuit (140), coupled to the at least one wire (310) and the processor (110), wherein the modulation circuit (140) demodulates the sensed data to obtain demodulated sensed data and forwards the demodulated sensed data to the processor (110), wherein the processor (110) configures the inverter (120) according to the demodulated sensed data.

8. The motor control system (10) of claim 6, wherein the motor controller (100) further comprising:
a position detector (130), coupled to the at least one wire (310) and the processor (110), wherein the position detector (130) obtains position information of the BLDC motor (210) via the at least one wire (310) and transmits the position information to the processor (110), wherein the processor (110) configures the inverter (120) according to the position information.

9. A motor control method, adapted to a motor control system comprising a motor controller and a motor device, **characterized in that**, the motor control method comprising:
coupling a brushless direct current (BLDC) motor of the motor device to the motor controller via at least one wire, wherein the motor controller provides power to the BLDC motor via the at least one wire (S201); and
coupling a sensor of the motor device to the motor controller via the at least one wire, wherein the sensor generates sensed data, wherein the sensed data is transmitted to the motor controller via the at least one wire (S202), wherein the sensor comprises at least one of the followings: an acoustic emission sensor, a temperature sensor, and a vibration sensor, wherein the motor controller transmits a command to the motor device via the at least one wire, wherein the motor device feedbacks the sensed data to the motor controller according to the command.
